Europäisches Patentamt

European Patent Office

Office européen des brevets

(19)

(11) Numéro de publication : **0 440 535 A1**

## (12) DEMANDE DE BREVET EUROPEEN

(21) Numéro de dépôt : **91400180.5**

(22) Date de dépôt : **28.01.91**

(51) Int. Cl.[5] : **C08L 29/04, C08L 23/04, C08L 51/00, // (C08L29/04, 23:04, 51:00)**

(30) Priorité : **01.02.90 JP 23015/90**

(43) Date de publication de la demande :
**07.08.91 Bulletin 91/32**

(84) Etats contractants désignés :
**AT BE CH DE DK ES FR GB GR IT LI LU NL SE**

(71) Demandeur : **ATOCHEM**
**4 & 8, Cours Michelet La Défense 10**
**F-92800 Puteaux (FR)**

(72) Inventeur : **Moriyama, Takamasa**
**9-303, Senriyama**
**Hoshigaoka, Suita (JP)**
Inventeur : **Takida, Hiroshi**
**34-13, Miya noga wara 5-Chome**
**Takatsuki (JP)**
Inventeur : **Uemura, Tomoyoshi**
**7-24, Minohara 3-Chome**
**Ibaraki (JP)**

(54) **Composition de copolymère éthylène-acétate de vinyle saponifié et son utilisation.**

(57) L'invention concerne une composition à propriété barrière aux gaz comprenant un copolymère éthylène-acétate de vinyle saponifié, un copolymère de l'éthylène ayant une masse volumique de 0,90 - 0,94 g/cm$^3$ et un agent compatibilisant défini dans la description.

Utilisation de la composition pour la préparation de films utilisables notamment dans l'emballage.

EP 0 440 535 A1

Jouve, 18, rue Saint-Denis, 75001 PARIS

# COMPOSITION AMELIOREE DE COPOLYMERE ETHYLENE-ACETATE DE VINYLE SAPONIFIE ET SON UTILISATION

## Domaine d'utilisation industriel

La présente invention fournit une composition de copolymère éthylène-acétate de vinyle saponifié assurant une propriété d'imperméabilité à l'oxygène améliorée et des propriétés physiques nettement améliorée, par exemple l'étirabilité, la propriété filmogène et autre moulabilité et flexibilité.

## Art antérieur

Les copolymères éthylène-acétate de vinyle saponifiés en général ont diverses excellentes propriétés telles qu'une propriété d'imperméabilité à l'oxygène, une résistance mécanique, etc., et trouvent, en tant que tels, une application dans de nombreuses utilisations comme films, feuilles, matériaux pour récipients, fibres textiles, etc. Cependant, ce copolymère saponifié donne naissance à une variation de l'épaisseur du produit dans le procédé de moulage pour la fabrication d'un film ou d'une feuille, avec une baisse consécutive de l'aptitude à la commercialisation du produit et, à cause du défaut d'étirabilité et de flexibilité, donne naissance à un tirage non uniforme au cours de l'emboutissage profond et d'autres procédés faisant intervenir une force d'étirement, ou des trous d'aiguille au cours de l'utilisation du produit, imposant ainsi de sérieuses limitations à son application comme matière première d'emballage.

Pour surmonter ces inconvénients, on a tenté de stratifier une matière en résine imperméable, comme un film de polyoléfine, sur une feuille de copolymère éthylène-acétate de vinyle saponifié ou d'améliorer l'étirabilité et la flexibilité du moulage en incorporant une polyoléfine dans le copolymère saponifié.

## Problèmes à résoudre

Cependant, le premier procédé nécessite un procédé de stratification comme étape essentielle et le dernier procédé ne surmonte pas non plus radicalement les inconvénients. Ainsi, la compatibilité entre le copolymèreéthylène-acétate de vinyle saponifié et ladite polyoléfine n'est pas nécessairement suffisamment bonne et, malgré de nombreux efforts pour surmonter cet inconvénient, les résultats ne sont pas aussi satisfaisants qu'on le souhaiterait. Ainsi les technologies de l'art antérieur ne rencontrent pas suffisamment de succès pour améliorer le manque d'uniformité de l'épaisseur des films, l'étirabilité et la flexibilité du copolymère éthylène-acétate de vinyle saponifié, tout en maintenant ses caractéristiques inhérentes.

## Moyens de résoudre les problèmes

Les recherches intensives entreprises par les inventeurs de la présente invention ont révélé que les buts précités sont atteints grâce à une composition de copolymère éthylène-acétate de vinyle saponifié qui comprend

(A) 50 à 99,5% en poids d'un copolymère éthylène-acétate de vinyle saponifié,

(B) 0,4 à 50% en poids d'un copolymère de l'éthylène ayant une masse volumique de 0,90 - 0,94 g/cm³, et

(C) un polymère greffé obtenu par greffage d'un acide carboxylique à insaturation éthylénique ou d'un de ses dérivés sur une résine de polyoléfine et par réaction du composé d'addition avec un oligomère de polyamide.

La présente invention va être décrite plus en détail dans la suite, l'accent étant mis sur la composition ci-dessus et en particulier sur ses utilisations.

Le copolymère éthylène-acétate de vinyle saponifié (A) à employer selon la présente invention est un copolymère ayant une teneur en éthylène de 20 à 60% en moles, de préférence de 25 à 55% en moles, le degré de saponification de son composant acétate de vinyle n'étant pas inférieur à 95% en moles.

Avec une teneur en éthylène inférieure à 20% en moles, la propriété d'imperméabilité à l'oxygène dans des conditions de forte humidité n'est pas aussi élevée qu'on le souhaiterait, tandis q'une teneur en éthylène dépassant 60% en moles conduit à des baisses de la propriété d'imperméabilité à l'oxygène, de l'aptitude à l'impression et d'autres propriétés physiques. Lorsque le degré de saponification ou d'hydrolyse est inférieur à 95% en moles, la propriété d'imperméabilité à l'oxygène et la résistance à l'humidité sont sacrifiées. Parmi ces copolymères saponifiés, ceux qui ont des indices de fluidité à chaud dans l'intervalle de 0,5 à 100 g/10 minutes sont particulièrement utiles.

Il est entendu que ce copolymère saponifié peut contenir de faibles proportions d'autres ingrédients comonomères, y compris des α-oléfines comme le propylène, l'isobutène, l'α-octène, l'α-dodécène, l'α-octadécène, etc., des acides carboxyliques insaturés ou leurs sels, des esters alkyliques partiels, des esters alkyliques complets, des nitriles, des amides et des anhydrides desdits acides, et des acides sulfoniques insaturés ou leurs sels.

Le copolymère d'éthylène (B) est quelconque parmi les copolymères du commerce facilement disponibles comme un polyéthylène basse densité, un polyéthylène basse densité linéaire, un copolymère éthylène-acétate de vinyle, un copolymère éthylène-ester acrylique, etc.

Un copolymère de ce type doit avoir une masse volumique de 0,90 - 0,94 g/cm³ (JIS K-6760). Avec un polyéthylène moyenne densité ou un polyéthylène haute densité, on ne peut pas facilement obtenir les effets de l'invention.

Parmi ces copolymères (B), on emploie de préférence ceux ayant des indices de fluidité à chaud (190°C, charge 2 160 g ; même chose dans la suite) dans l'intervalle d'environ 0,3 à 30 g/10 minutes.

Pour améliorer la compatibilité entre (A) et (B), l'incorporation de (C) est essentielle à la mise en oeuvre de l'invention.

Le composant (C) est un polymère greffé que l'on obtient en greffant un acide carboxylique à insaturation éthylénique ou un de ses dérivés à une résine de polyoléfine et en faisant réagir cet acide carboxylique ou dérivé avec un oligomère de polyamide.

On peut produire ce polymère greffé en dissolvant ou en mettant en suspension une résine de polyoléfine dans un solvant approprié ou en la mettant à l'état fondu, en activant la chaîne de résine de polyoléfine avec un initiateur de type peroxyde ou diazoïque, en y greffant un acide carboxylique à insaturation éthylénique ou un de ses dérivés pour obtenir un polymère et en mélangeant ce polymère avec un oligomère de polyamide à l'état fondu.

Pour cette réaction, on emploie une machine de Brabender, un malaxeur de Buss, une extrudeuse monovis, une extrudeuse bivis de Werner et Pfleiderer ou analogue.

Le degré de polymérisation de la résine de polyoléfine à employer est d'environ 350 à 45 000, et de préférence d'environ 500 à 10 000. L'indice de fluidité à chaud (230°C ; charge 2160 g ; même chose dans la suite) est d'environ 0,1 à 50 g/10 minutes pour toutes les utilisations pratiques.

Le rapport réactionnel de la résine de polyoléfine à l'acide carboxylique à insaturation éthylénique ou son dérivé est de 100/0,05 à 100/10, et de préférence de 100/0,5 à 100/3, exprimé sur une base pondérale.

Si le rapport est de 100/moins de 0,05, l'effet améliorant sur la compatibilité n'est pas suffisant. D'autre part, si le rapport est de 100/plus de 10, la viscosité est trop élevée pour un moulage pratique.

Le degré de polymérisation dudit oligomère de polyamide est de 5 à 80, de préférence d'environ 15 à 55, pour toutes les utilisations pratiques, et le rapport réactionnel est de 0,01 à 1 mole, et de préférence de 0,05 à 0,9 mole, par mole du groupe carboxyle.

Comme exemples de la résine de polyoléfine, on peut citer un polyéthylène linéaire basse densité, un polyéthylène basse densité ou haute densité, des ionomères, un copolymère éthylène-propylène, un copolymère éthylène-acétate de vinyle, un copolymère éthylène-ester acrylique, etc. Ceux qui sont importants pour les applications pratiques sont un polyéthylène linéaire basse densité, un polyéthylène basse densité, un copolymère éthylène-propylène et un copolymère éthylène-acétate de vinyle.

L'acide carboxylique à insaturation éthylénique ou son dérivé à greffer à ce polymère principal englobe, entre autres, les acides carboxyliques insaturés comme l'acide acrylique, l'acide méthacrylique, l'acide crotonique, l'acide maléique, l'acide fumarique et l'acide itaconique, et les anhydrides ou semi-esters correspondants.

L'oligomère de polyamide peut être préparé par des procédés connus comme la polymérisation d'addition d'un lactame, la polycondensation d'un acide aminocarboxylique, la polycondensation d'une diamine avec un acide dicarboxylique, etc.

Des exemples des produits de départ pour ledit oligomère de polyamide sont divers lactames comme l'ε-caprolactame, l'énantholactame, le caprylolactame, le laurolactame, l'α-pyrrolidone, l'α-pipéridone, etc., les ω-aminoacides comme l'acide 6-aminocaproïque, l'acide 7-aminoheptanoïque, l'acide 9-aminononanoïque, l'acide 11-aminoundécanoïque, etc., les diacides comme l'acide adipique, l'acide glutarique, l'acide pimellique, l'acide subérique, l'acide azélaïque, l'acide sébacique, l'acide undécadioïque, l'acide dodécadioïque, l'acide hexadécadioïque, l'acide hexadécènedioïque, l'acide éicosadioïque, l'acide éicosadiènedioïque, l'acide diglycolique, l'acide 2,2,4-triméthyladipique, l'acide xylylènedicarboxylique, l'acide 1,4-cyclohexanedicarboxylique, l'acide téréphtalique, l'acide isophtalique, etc., et les diamines comme l'hexaméthylènediamine, la tétraméthylènediamine, la nonaméthylènediamine, l'undécaméthylènediamine, la dodécaméthylènediamine, la 2,2,4- (ou 2,4,4-)triméthylhexaméthylènediamine, le bis(4,4'-aminocyclohexyl)méthane, la métaxylylènediamine, etc. Pour la régulation de la masse moléculaire, on peut aussi utiliser une monoamine comme la laurylamine ou

EP 0 440 535 A1

l'oléylamine en une quantité appropriée.

Dans la composition de la présente invention, la proportion de (A) doit être de 50 à 99,5% en poids et de préférence de 60 à 95% en poids, celle de (B) doit être de 0,4 à 50% en poids et de préférence de 4,5 à 35% en poids, et celle de (C) doit être de 0,1 à 15% en poids et de préférence de 0,5 à 10% en poids.

Lorsque la proportion de (A) est inférieure à 50% en poids ou que celle de (B) est supérieure à 50% en poids, cela a une incidence défavorable sur la propriété d'imperméabilité à l'oxygène. Inversement, lorsque la proportion de (A) est supérieure à 99,5% en poids ou que celle de (B) est inférieure à 0,4% en poids, l'étirabilité et la flexibilité sont sacrifiées et on a tendance à trouver un manque d'uniformité de l'épaisseur du film. Lorsque la proportion de (C) est inférieure à 0,1% en poids, la compatibilité entre (A) et (B) est faible et l'effet de l'invention est difficile à réaliser. Inversement, lorsque la proportion de (C) dépasse 15% en poids, cela a une incidence défavorable sur la moulabilité en grande série.

Alors que la composition selon la présente invention est utile pour une variété d'applications comme des articles façonnés, des adhésifs, des revêtements, etc., elle est particulièrement utile dans des applications de moulage et peut être moulée en pastilles, films, feuilles, récipients, fibres, barreaux, tuyaux et autres articles façonnés, par la technique du pétrissage en fusion. Ces produits peuvent être broyés (pour être régénérés) ou mis en pastilles pour un nouveau moulage en fusion.

Pour le moulage en fusion de la composition, le moulage par extrusion (par exemple l'extrusion en filière en T, le moulage par gonflement, le moulage par soufflage, le filage en fusion ou l'extrusion-profilage) et le moulage par injection sont principalement employés. La température de moulage en fusion est choisie dans de nombreux cas dans l'intervalle de 170 à 270°C. En plus des techniques ci-dessus, on peut aussi employer des techniques de moulage à deux couleurs et de moulage par injection-soufflage et on peut fabriquer des articles façonnés ayant de bonnes tolérances dimensionnelles.

Dans le procédé de moulage, il est bien sûr possible d'utiliser deux ou plus de deux copolymères éthylène-acétate de vinyle saponifiés de teneurs en éthylène et/ou de degré de saponification différents, en combinaison. Dans le moulage en fusion, il est aussi possible d'incorporer des quantités convenables d'additifs comme un plastifiant (par exemple un polyalcool), un stabilisant, un tensioactif, un agent de réticulation (par exemple un composé époxydé, un sel de métal polyvalent, un polyacide minéral ou organique ou un de ses sels), une charge, un colorant, une fibre de renforcement (par exemple une fibre de verre, une fibre de carbone, etc.), de l'hydrotalcite, etc. Il est aussi possible d'incorporer diverses autres résines thermoplastiques dans une proportion convenable. Ces résines thermoplastiques englobent, entre autres, diverses polyoléfines autres que (B), des polyoléfines modifiées que l'on obtient par modification par greffage de ces polyoléfines avec des acides carboxyliques insaturés ou des dérivés de ceux-ci, des polyamides, du poly(chlorure de vinyle), du poly(chlorure de vinylidène), des polyesters, du polystyrène, du polyacrylonitrile, des polyuréthanes, des polyacétals, des polycarbonates, une résine de poly(alcool vinylique) moulable à chaud, etc.

Comme on l'a indiqué ci-dessus, la composition de la présente invention n'est pas seulement utilisée pour la fabrication d'un article à une seule couche essentiellement composé de la composition, mais est aussi souvent utilisée comme article stratifié contenant au moins une couche de la composition.

Dans la fabrication d'un produit stratifié selon l'invention, dans lequel un matériau différent est stratifié sur un côté ou sur les deux côtés d'une couche de la composition de l'invention, on peut, par exemple, employer les procédés de stratification suivants. On peut ainsi mentionner le procédé qui comprend l'extrusion en fusion d'une résine thermoplastique sur un film ou une feuille de la composition de l'invention, le procédé qui comprend l'extrusion en fusion de la composition de l'invention sur un substrat fait d'une résine thermoplastique ou d'un autre matériau quelconque, le procédé qui comprend la co-extrusion de la composition de l'invention et d'une résine thermoplastique différente, et le procédé dans lequel un film ou une feuille de la composition de l'invention est stratifié sur un film ou une feuille d'un matériau différent avec un adhésif connu tel qu'un composé d'organotitane, un composé isocyanate ou un composé polyester.

Comme résines de combinaison pour la co-extrusion, on peut mentionner un polyéthylène linéaire basse densité, un polyéthylène basse densité, un polyéthylène moyenne densité, un polyéthylène haute densité, un copolymère éthylène-acétate de vinyle, des ionomères, des copolymères éthylène-propylène, des copolymères éthylène-ester acrylique, un polypropylène, des copolymères propylène-α-oléfine (α-oléfine en $C_4$-$C_{20}$), des homo- et copolymères d'oléfines comme le polybutène, le polypentène, etc., et des résines de polyoléfine au sens large que l'on obtient en modifiant ces homopolymères ou copolymères d'oléfines par greffage d'un acide carboxylique insaturé ou d'un ester de celuici, des polyesters, des polyamides, des polyamides copolymérisés, un poly(chlorure de vinyle), un poly(chlorure de vinylidène), des résines acryliques, des résines styréniques, une résine d'ester vinylique, des élastomères de polyester, des élastomères de polyuréthanne, un polyéthylène chloré, un polypropylène chloré, etc. Un copolymère éthylène-acétate de vinyle saponifié peut aussi être co-extrudé.

Lorsqu'on prépare un film ou une feuille ou un article façonné analogue à partir de la composition de l'inven-

4

tion, puis qu'on le revêt par extrusion d'un matériau différent ou qu'on le stratifie sur un film ou une feuille d'un matériau différent avec un adhésif, ledit matériau différent n'est pas limité auxdites résines thermoplastiques, mais peut être pratiquement n'importe quel autre matériau (comme le papier, une feuille métallique, un film ou une feuille de matière plastique orienté uniaxialement ou biaxialement, un tissu tissé, un tissu non tissé, un filament métallique, du bois, etc.).

La structure stratifiée dudit produit stratifié est une question de choix. Ainsi, une couche de la composition de l'invention étant appelée A ($A_1$, $A_2$,...) et une couche d'un matériau différent, par exemple une résine thermoplastique, étant appelée B ($B_1$, $B_2$,...), on peut employer pour un film, une feuille ou une bouteille, par exemple, non seulement une structure à deux couches de A/B, mais aussi une variété d'autres combinaisons comme B/A/B, A/B/A/, $A_1$/$A_2$/B, A/$B_1$/$B_2$, B/A/B, $B_2$/$B_1$/A/$B_1$/$B_2$, etc. Dans le cas d'un filament, on peut adopter un type bimétal, âme (A) - gaine (B), âme (B) - gaine (A), âme-gaine excentrées et d'autres combinaisons de A et de B.

Pour la co-extrusion, on peut mélanger A à B ou vice versa ou bien, pour améliorer l'adhérence entre les couches, on peut incorporer une résine convenable au moins dans l'un de A et B.

Le produit stratifié peut être éventuellement configuré. Ainsi, on peut citer un film, une feuille, un ruban, une bouteille, un tuyau, un filament ou un extrudat à section droite modifiée.

Le produit stratifié peut, éventuellement, être soumis ensuite à une variété de traitements, comme un traitement thermique, un refroidissement, un laminage, une impression, une stratification à sec, un revêtement en solution ou en fusion, la production de sacs, l'emboutissage profond, la fabrication de boîtes, la fabrication de tubes, un dédoublement, etc.

Les articles façonnés et les produits stratifiés précités peuvent avoir des propriétés physiques améliorées par étirage ou traction, le cas échéant.

Dans la présente invention, la composition est moulée en fusion en un matériau en film. L'épaisseur de ce film est pratiquement une question de choix et peut s'échelonner de quelques microns à plusieurs centaines de microns. Le terme "film" utilisé dans cette description signifie un film au sens large du terme, incluant ainsi une feuille, un ruban, un tube, un récipient, etc.

Comme ces films ont une épaisseur uniforme, leur aptitude à la commercialisation est élevée. En outre, cette stabilité de l'épaisseur des films est conservée, même après une longue série d'étapes de moulage et de traitement.

Le film obtenu de la manière ci-dessus est conditionné pour l'absorption de l'humidité ou le séchage, éventuellement, puis étiré.

Cet étirage peut être uniaxial ou biaxial. Les effets de l'invention sont mieux matérialisés lorsque le taux d'étirage ou traction est aussi élevé que possible. Dans le cas d'un étirage uniaxial, le taux d'étirage est de préférence d'au moins 1,5 fois et, pour de meilleurs résultats encore, non inférieur à 2 fois. Dans le cas d'un étirage biaxial, le taux d'étirage n'est de préférence pas inférieur à 1,5 fois, mieux encore pas inférieur à 2 fois et, pour des résultats encore meilleurs, pas inférieur à 4 fois, sur une base surfacique.

La présente invention est caractérisée en ce que l'on garantit un fort taux de traction pas inférieur à 5, en particulier supérieur à 7.

Quant à la technique d'étirage que l'on peut employer, on peut citer les procédés d'étirage au cylindre, d'étirage à la rame, d'étirage tubulaire et d'étirage-soufflage, ainsi que l'emboutissage profond à forte traction ou le moulage sous vide. Dans le cas d'un tirage biaxial, on peut adopter ou bien l'étirage biaxial simultané, ou bien l'étirage biaxial en deux temps.

La température d'étirage est choisie dans l'intervalle d'environ 40 à 150°C.

A la fin de l'étirage, le produit est durci thermiquement. Ce durcissement thermique peut être réalisé par la technique bien connue. Ainsi, le film étiré étant maintenu dans un état raidi, il est traité thermiquement à une température de 50 à 160°C, de préférence de 80 à 160°C, pendant environ 2 à 600 secondes.

Le film orienté résultant peut être soumis à une variété de traitements tels que refroidissement, laminage, impression, stratification à sec, revêtement en solution ou en fusion, fabrication de sacs, emboutissage profond, fabrication de boîtes, fabrication de tubes, dédoublement, etc.

Le film, la feuille ou le récipient que l'on obtient à partir de la composition de la présente invention est utile pour emballer les denrées alimentaires, les produits pharmaceutiques, les produits chimiques industriels, les produits agrochimiques, etc.

Effets

Selon la présente invention, la composition d'un copolymère éthylène-acétate de vinyle saponifié (A) et d'un copolymère de l'éthylène ayant une masse volumique définie (B) est utilisée en combinaison avec un polymère greffé spécifié (C), avec pour résultat une nette amélioration de la compatibilité de (A) et de (B) et que l'article façonné obtenu à partir de la composition présente une excellente propriété d'imperméabilité à l'oxygène et des améliorations marquées d'étirabilité, d'épaisseur du film et de flexibilité qui manquent à (A).

Exemples

Les exemples suivants constituent une autre illustration de la composition de la présente invention. Dans la description qui suit, toutes les parties et tous les % sont en poids, sauf indication contraire.

## Copolymère éthylène-acétate de vinyle saponifié

| Echantillon | E-1 | E-2 | E-3 | E-4 |
|---|---|---|---|---|
| Teneur en éthylène (% en moles) | 30 | 33 | 40 | 45 |
| Degré de saponification du composant acétate de vinyle (% en moles) | 99,4 | 99,1 | 99,6 | 99,7 |
| Indice de fluidité à chaud (g/10 min) | 3,8 | 5,5 | 7,2 | 12,5 |

## Copolymère de l'éthylène

| Echantillon | Masse volumique (g/cm$^3$) | Indice de fluidité à chaud (g/10 minutes) |
|---|---|---|
| P-1 Polyéthylène basse densité | 0,924 | 6 |
| P-2 Polyéthylène basse densité linéaire | 0,920 | 2,1 |
| P-3 Ethylène-acétate de vinyle (15%) | 0,934 | 14 |

## Polymère greffé

| Echantillon | G-1 | G-2 | G-3 | G-4 |
|---|---|---|---|---|
| Polymère principal (a) | Polyéthylène linéaire basse densité | Polyéthylène linéaire basse densité | Copolymère éthylène acétate de vinyle (12%) | Copolymère éthylène (12%)-propylène |
| IFC (g/10 min) | (12,5) | (7,8) | (4,5) | (8,0) |
| Acide carboxylique insaturé (b) | Anhydride maléique | Anhydride maléique | Anhydride maléique | Anhydride maléique |
| Oligomère polyamide (c) | Oligomère ε-caprolactame ($\bar{P}$ : 25) | Oligomère ε-caprolactame ($\bar{P}$ : 40) | Oligomère hexaméthylènediamine/acide adipique ($\bar{P}$ : 24) | Oligomère ε-caprolactame ($\bar{P}$ : 24) |
| Rapport de composition: (a)/(b) (rapport pondéral) | 100/2,1 | 100/2,5 | 100/1,8 | 100/2,9 |
| (c)/(b) (rapport molaire) | 1/2 | 2/2,5 | 1,4/1,8 | 0,9/2,9 |

EP 0 440 535 A1

EP 0 440 535 A1

Exemples 1 à 8 et exemples de référence 1 à 6

On mélange dans un malaxeur Henschel des pastilles de la composition de (A), (B) et (C) et on les introduits dans une extrudeuse à filière en T pour le pétrissage en fusion et l'extrusion de la filière en T, pour produire un film de 30 μ d'épaisseur. (Dans l'évaluation de l'étirabilité, on utilise un film de 180 μ d'épaisseur.)

Les conditions de moulage par extrusion sont les suivantes.

Extrudeuse : extrudeuse de diamètre 40 mm

Vis : type tête de Dulmage, L/D = 28, taux de compression = 3

Température d'extrusion : 230°C

Vitesse de rotation de la vis : 40 tours/min

Les résultats obtenus sur le film sont indiqués sur le tableau 1.

Dans ce tableau, ainsi que dans les tableaux 2 et 3, les signes ◎ , ○, Δ et X signifient respectivement t r è s bon, bon, moyen et mauvais.

# EP 0 440 535 A1

## Tableau 1

| | Matériau | Rapport de mélange E/P/G | Propriétés physiques | | | | |
|---|---|---|---|---|---|---|---|
| | | | Perméabilité à l'oxygène (cc.20μ/m2. jour.atm) 25°C x 75% HR | Etirabilité 5x5 7x7 | | Résistance au choc (kg·cm/mm) | Stabilité de l'épaisseur du film |
| Exemple 1 | E-1 P-1 G-1 | 70/25/5 | 1,0 | ☺ | o | 95 | ⊙ |
| 2 | E-2 P-2 G-2 | 75/15/10 | 1,1 | ◎ | ◎ | 115 | ◎ |
| 3 | E-3 P-3 G-3 | 85/10/5 | 1,7 | ◎ | o | 140 | ◎ |
| 4 | E-4 P-1 G-4 | 85/10/5 | 2,3 | ◎ | o | 150 | ◎ |
| 5 | E-1 P-2 G-1 | 70/20/10 | 1,1 | ◎ | ◎ | 105 | ◎ |
| 6 | E-2 P-2 G-2 | 80/12,5/7,5 | 1.0 | ◎ | o | 110 | ◎ |
| 7 | E-3 P-1 G-2 | 75/15/10 | 1,6 | o | o | 145 | ◎ |
| 8 | E-4 P-2 G-2 | 80/15/5 | 2,5 | ◎ | o | 135 | ◎ |
| 1 | E-1 P-1 | 74/26 | 1,0 | x | x | 35 | x |
| 2 | E-1 P-1 G-1 | 99,6/0,3/0,1 | 0,8 | x | x | 55 | ◎ |
| 3 | " | 40/50/10 | 350 | ◎ | ◎ | 125 | Δ |
| 4 | " | 55/20/25 | 40 | ◎ | ◎ | 130 | Δ |
| 5 | " | 74/25,95/0,05 | 1.1 | x | x | 35 | x |
| 6 | E-1 P-1 PO | 70/25/5 | 1,2 | x | x | 30 | x |

Dans le tableau ci-dessus, PO représente un polyéthylène de moyenne densité ayant une masse volumique de 0,955 g/cm$^3$.

(Détermination des propriétés physiques)

Perméabilité à l'oxygène : déterminée avec un MOCON Oxtran 10/50.

Etirabilité : évaluée en termes d'étirage non uniforme dans un étirage biaxial simultané (5 x 5 fois et 7 x 7 fois) à 90°C.

Résistance au choc : déterminée dans un appareil de mesure des chocs pour films, diamètre de la tête d'impact 3/2 μ-pouce, 20°C x 65% HR.

9

Stabilité de l'épaisseur du film : en utilisant une jauge d'épaisseur de film continue, on mesure et on évalue la variation de l'épaisseur du film dans la direction de l'extrusion.

Exemples 9 à 13

Couche extérieure (I) : Nylon 6 [Indice de fluidité à chaud : 4 g/10 min (230°C, 2160 g)]
Couche intermédiaire (II) : composition de (A), (B) et (C) selon l'invention
Couche adhésive (III) : copolymère éthylène modifié par l'anhydride maléique-acétate de vinyle [Indice de fluidité à chaud : 2,5 g/10 min (190°C, 2160 g)]
Couche intérieure (IV) : copolymère éthylène-acétate de vinyle (10%)
[Indicede fluidité à chaud : 2 g/10 min (190°C, 2160 g)].
En utilisant les matériaux résiniques ci-dessus, on fabrique, dans les conditions suivantes, un stratifié à quatre couches ayant pour construction et épaisseurs de films ($\mu$) (I)/(II)/(III)/(IV) = 20/10/5/20. (Dans l'essai d'étirage, cependant, on utilise une feuille de 80/40/20/80.)

Conditions de moulage

Extrudeuses
Extrudeuse de diamètre 40 mm (pour la couche intérieure)
Extrudeuse de diamètre 40 mm (pour la couche intermédiaire)
Extrudeuse de diamètre 30 mm (pour la couche adhésive)
Extrudeuse de diamètre 40 mm (pour la couche extérieure)
Vis : tous les L/D = 28 ; taux de compression 3,2
Vitesse de rotation de la vis :
40 tours/min pour la couche intérieure
20 tours/min pour la couche intermédiaire
20 tours/min pour la couche adhésive
40 tours/min pour la couche extérieure
Filière :
Filière en T avec adaptateur de combinaison de 4 couches
Largeur de la filière : 450 mm
Température d'extrusion :
Extrudeuses pour couches intérieure, extérieure et adhésive
$C_1 = 190°C$ $C_2 = 200°C$
$C_3 = 210°C$ $C_4 = 220°C$
Extrudeuse pour couche intermédiaire
$C_1 = 180°C$ $C_2 = 200°C$
$C_3 = 220°C$ $C_4 = 220°C$
Adaptateur de combinaison 210°C
Filière en T 210°C
Les résultats sont présentés sur le tableau 2.

## Tableau 2

| | Maté-riau | Rapport de mélange E/P/G | Propriétés physiques | | | |
|---|---|---|---|---|---|---|
| | | | Perméabilité à l'oxygène (cc.20μ/m2. jour.atm) 25°C x 75%HR | Etira-bilité | Résistance au choc (kg·cm/mm) | Adhérence entre couches (g/15 mm) |
| Exemple 9 | E-1 P-1 G-1 | 70/20/10 | 1,1 | ◎ | 155 | 950 |
| 10 | E-2 P-2 G-2 | 80/12/3 | 1,0 | ◎ | 130 | 830 |
| 11 | E-3 P-3 G-3 | 85/10/5 | 1,7 | ◎ | 125 | 870 |
| 12 | E-4 P-1 G-4 | 70/25/5 | 2,8 | ◎ | 145 | 800 |
| 13 | E-1 P-2 G-1 | 75/15/10 | 1,0 | ◎ | 150 | 980 |

### Exemples 14 à 18

Couche intérieure (I) et couche extérieure (V) : polyéthylène basse densité (indice de fluidité à chaud : 2,0 g/10 min)

Couches adhésives (II) et (IV) : polyéthylène basse densité linéaire modifié par de l'anhydride maléique (indice de fluidité à chaud : 2 g/10 min)

Couche intermédiaire (III) : composition de (A), (B) et (C) selon l'invention.

En utilisant les matériaux résiniques ci-dessus, on fabrique, dans les conditions suivantes, un stratifié à cinq couches ayant pour construction et épaisseurs de films (μ) (I)/(II)/(III)/(IV)/(V) = 20/5/10/5/20. (Dans l'essai d'étirage, cependant, on utilise un film de 80/20/40/20/80 (μ).)

Extrudeuses :

    Extrudeuse de diamètre 40 mm (pour les couches intérieure et extérieure)

    Extrudeuse de diamètre 40 mm (pour la couche intermédiaire)

    Extrudeuse de diamètre 30 mm (pour les couches adhésives)

Vis : tous les L/D = 2,8 ; taux de compression 3,2

Vitesse de rotation de la vis :

    65 tours/min pour les couches intérieure et extérieure

    20 tours/min pour la couche intermédiaire

    30 tours/min pour les couches adhésives

Filière :

    Filière en T avec adaptateur de combinaison de 5 couches

    Largeur de la filière : 1200 mm

Température d'extrusion :

    Extrudeuses pour couches intérieure, extérieure et adhésives

        $C_1 = 190°C$   $C_2 = 200°C$

        $C_3 = 210°C$   $C_4 = 220°C$

    Extrudeuse pour couche intermédiaire

        $C_1 = 180°C$   $C_2 = 200°C$

        $C_3 = 220°C$   $C_4 = 220°C$

Adaptateur de combinaison 220°C

Filière en T 210°C

Les résultats sont présentés sur le tableau 3.

Tableau 3

| | Maté-riau | Rapport de mélange E/P/G | Propriétés physiques | | | |
|---|---|---|---|---|---|---|
| | | | Perméabilité à l'oxygène (cc.20µ/m2. jour.atm) 25°C x 75% HR | Etira-bilité | Résistance au choc (kg·cm/mm) | Adhérence entre couches (g/15 mm) |
| Exemple | 14 E-1 P-1 G-1 | 72/20/5 | 1,9 | ◎ | 95 | 950 |
| | 15 E-2 P-2 G-2 | 85/5/10 | 1,0 | ◎ | 90 | 1050 |
| | 16 E-3 P-3 G-3 | 75/15/10 | 1,9 | ◎ | 115 | 900 |
| | 17 E-4 P-1 G-4 | 70/20/10 | 2,9 | ◎ | 100 | 930 |
| | 18 E-1 P-2 G-1 | 90/5/5 | 1,0 | ◎ | 85 | 850 |

## Revendications

1. Composition améliorée de copolymère éthylène-acétate de vinyle saponifié comprenant
   (A) 50 à 99,5%'en poids d'un copolymère éthylène-acétate de vinyle saponifié,
   (B) 0,4 à 50% en poids d'un copolymère de l'éthylène ayant une masse volumique de 0,90 - 0,94 g/cm³, et
   (C) un polymère greffé obtenu par greffage d'un acide carboxylique à insaturation éthylénique ou d'un de ses dérivés sur une résine de polyoléfine et par réaction du composé d'addition avec un oligomère de polyamide.

2. Article façonné obtenu par moulage en fusion d'une composition selon la revendication 1.

3. Structure stratifiée dont au moins une couche est constituée d'une composition selon la revendication 1.

4. Article façonné selon la revendication 2 ou structure stratifiée selon la revendication 3, qui est au moins orienté uniaxialement.

| Office européen des brevets | RAPPORT DE RECHERCHE EUROPEENNE | Numero de la demande |
|---|---|---|
| | | EP 91 40 0180 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-342066 (ATOCHEM)<br>* page 2, ligne 5 - page 4, ligne 56; revendications 1-10 *<br>--- | 1 | C08L29/04<br>C08L23/04<br>C08L51/00<br>//(C08L29/04,<br>23:04,51:00) |
| A | WPIL FILE SUPPLIER, Derwent Publications Ltd., London GB; AN=81-08788D & JP-A-55 155042 (Mitsubishi Chem Ind KK) 04-12-1980<br>----- | 1 | |

|  |  |
|---|---|
| | **DOMAINES TECHNIQUES RECHERCHES (Int. Cl.5)** |
| | C08L<br>C08F<br>C08G |

Le présent rapport a été établi pour toutes les revendications

| Lieu de la recherche | Date d'achèvement de la recherche | Examinateur |
|---|---|---|
| LA HAYE | 04 AVRIL 1991 | WILSON A.J.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)